Europäisches Patentamt

(19) European Patent Office     (11)   Numéro de publication: **0 120 524**

Office européen des brevets                       **B1**

(12)            **FASCICULE DE BREVET EUROPÉEN**

(45)   Date de publication du fascicule du brevet:      (51)   Int. Cl.⁴: **C 08 F 14/22,** C 08 F 2/38
26.11.86

(21)   Numéro de dépôt: **84200275.0**

(22)   Date de dépôt: **28.02.84**

(54)   **Procédé pour la polymérisation dans un milieu aqueux de mise en suspension du fluorure de vinylidène.**

(30)   Priorité: **10.03.83 FR 8304106**

(43)   Date de publication de la demande:
**03.10.84 Bulletin 84/40**

(45)   Mention de la délivrance du brevet:
**26.11.86 Bulletin 86/48**

(84)   Etats contractants désignés:
**AT BE CH DE FR GB IT LI NL SE**

(56)   Documents cité:
**US-A-3 707 592**
**US-A-4 360 652**

(73)   Titulaire: **SOLVAY & Cie (Société Anonyme), Rue
du Prince Albert, 33, B-1050 Bruxelles (BE)**

(72)   Inventeur: **Dumoulin, Joseph, Clos Saint- Roch, 15,
B-1970 Wezembeek- Oppem (BE)**

LIBER, STOCKHOLM 1986

## Description

La présente invention concerne un procédé pour la polymérisation dans un milieu aqueux de mise en suspension du fluorure de vinylidène à l'intervention d'un initiateur oléosoluble de la polymérisation radicalaire et en présence d'un agent de mise en suspension et d'un agent régulateur de chaînes.

Il est connu, d'une part, que les résidus d'initiateurs oléosolubles de la polymérisation radicalaire présents, après polymérisation, dans les polymères du fluorure de vinylidène en altèrent la stabilité thermique et, d'autre part, que bon nombre d'initiateurs oléosolubles utilisés habituellement pour initier la polymérisation radicalaire du fluorure de vinylidène agissent de manière concomitante comme des régulateurs de chaînes. Lorsqu'on cherche à améliorer la stabilité thermique des polymères du fluorure de vinylidène par un abaissement de la quantité d'initiateur oléosoluble radicalaire mise en oeuvre à la polymérisation, il convient généralement de recourir conjointement à la mise en oeuvre d'un agent régulateur de chaînes afin de ne pas affecter l'ouvrabilité des polymères résultants.

Dans le brevet britannique GB-A-1 094 558 (KUREHA KAGAKU KKK), on décrit la polymérisation en suspension aqueuse du fluorure de vinylidène en présence d'agents régulateurs de chaînes choisis, de préférence, parmi les cétones contenant de trois à quatre atomes de carbone et les alcools saturés contenant de 3 à 6 atomes de carbone dans leur molécule. Toutefois, il s'est avéré que ces agents régulateurs de chaînes présentent des inconvénients. Certains sont peu efficaces, c'est-à-dire qu'il est nécessaire de les mettre en oeuvre en des quantités relativement élevées pour obtenir un effet régulateur appréciable. D'autres, plus efficaces, conduisent à un ralentissement non négligeable de la polymérisation.

La présente invention a pour but de procurer des agents régulateurs de chaînes qui ne présentent pas les inconvénients précités.

La présente invention concerne à cet effet un procédé pour la polymérisation dans un milieu aqueux de mise en suspension du fluorure de vinylidène à l'intervention d'un initiateur oléosoluble de la polymérisation radicalaire en présence d'un agent de mise en suspension et d'un agent régulateur de chaînes dans lequel l'agent régulateur de chaînes est un carbonate de bis(alkyle) dont les groupements alkyles contiennent cinq atomes de carbone au plus.

Les carbonates de bis(alkyle) les plus efficaces, auxquels on donne par conséquent la préférence, sont ceux dont les groupements alkyles contiennent de 1 à 3 groupements méthylènes ($-CH_2-$). A titre d'exemples de pareils carbonates de bis(alkyle), on peut citer les carbonates de bis (éthyle), de bis (n-propyle), de bis (n-butyle), de bis (sec-butyle), de bis (iso-butyle), de bis (iso-amyle) et de bis (néo-pentyle).

Un carbonate de bis (alkyle) tout particulièrement préféré est le carbonate de bis (éthyle).

La quantité d'agent régulateur de chaînes à mettre en oeuvre n'est pas particulièrement critique. Elle dépend, bien entendu, du poids moléculaire, et donc de la viscosité intrinsèque, que l'on souhaite conférer au polymère ainsi que de la quantité d'initiateur mise en oeuvre. En général, on utilise d'environ 0,05 à 2,5% en poids d'agent régulateur par rapport au monomère mis en oeuvre, ce qui permet la fabrication de polymères du fluorure de vinylidène ayant des viscosités intrinsèques allant d'environ 0,05 à 0,2 l/g et donc de couvrir toute la gamme des techniques usuelles de transformation de ces polymères en objets façonnés. A l'intérieur de cette zone de concentrations, la quantité optimale d'agent régulateur sera choisie avantageusement par voie expérimentale en fonction des conditions de polymérisation et du résultat visé.

On peut mettre en oeuvre l'agent régulateur de chaînes en totalité au départ de la polymérisation ou encore par portions ou en continu en cours de polymérisation.

Dans le procédé selon l'invention, on peut initier la polymérisation à l'intervention des initiateurs oléosolubles usuels de la polymérisation radicalaire du fluorure de vinylidène. Des exemples représentatifs de tels initiateurs sont les peroxydicarbonates de dialkyles, le peroxyde d'acétylcyclohexanesulfonyle, le peroxyde de dibenzoyle, le peroxyde de dicumyle, les perbenzoates de t-alkyle et les perpivalates de t-alkyle. On donne néanmoins la préférence aux peroxydicarbonates de dialkyles tels que les peroxydicarbonates de diéthyle et de di-isopropyle et aux perpivalates de t-alkyle tels que les perpivalates de t-butyle et de t-amyle et, plus particulièrement encore aux perpivalates de t-alkyle.

La quantité d'initiateur oléosoluble mis en oeuvre à la polymérisation n'est pas critique. On peut donc mettre en oeuvre les quantités usuelles d'initiateur, c'est-à-dire d'environ 0,05 à 3% en poids par rapport au monomère mis en oeuvre. Néanmoins, on préfère utiliser d'environ 0,05 à 0,5% en poids d'initiateur, ce qui assure l'obtention de polymères présentant une bonne stabilité thermique. Dans ces conditions, on utilise en général d'environ 0,5 à 2% en poids de régulateur de chaînes.

Tout comme l'agent régulateur de chaînes, on peut mettre en oeuvre l'initiateur en totalité au départ de la polymérisation ou par portions ou en continu en cours de polymérisation.

La nature de l'agent de mise en suspension utilisé dans le procédé selon l'invention n'est pas non plus critique. Il peut donc être choisi parmi les agents de mise en suspension usuels utilisés à la polymérisation radicalaire dans un milieu aqueux de mise en suspension, tels que les alcools polyvinyliques et les dérivés cellulosiques hydrosolubles, tels que les alkyl- et les alkylhydroxyalkylcelluloses.

La quantité d'agent de mise en suspension est habituellement comprise entre 0,1 et 5 ‰ par rapport au monomère mis en oeuvre. Les meilleurs résultats sont obtenus lorsqu'on en utilise de 0,5 à 2 ‰ en poids.

La température de polymérisation peut se situer indifféremment en dessous ou au-dessus de la température critique du fluorure de vinylidène (30,1°C). Lorsque la température se situe en dessous de 30,1°C, la polymérisation s'effectue au sein d'une suspension aqueuse classique de fluorure de vinylidène liquide sous

2

une pression égale à la pression de vapeur saturante du fluorure de vinylidène. Lorsque la température se situe au-dessus de 30,1°C, elle s'effectue au sein d'une suspension aqueuse de fluorure de vinylidène gazeux se trouvant avantageusement sous pression élevée. On peut donc réaliser le procédé selon l'invention à des températures allant de la température ambiante à environ 110°C. On préfère néanmoins effectuer la polymérisation à une température située au-dessus de 30,1°C. Suivant un mode de réalisation préféré du procédé selon l'invention, on effectue la polymérisation du fluorure de vinylidène à une température comprise entre 35 et 100°C et sous des pressions initiales d'environ 55 à 200 bars. On peut, bien entendu, augmenter la productivité des réacteurs en procédant en cours de polymérisation de manière connue en soi, à des injections supplémentaires de monomère ou d'eau ou à une élévation de la température de polymérisation.

Le procédé de polymérisation du fluorure de vinylidène selon l'invention s'applique aussi bien à la polymérisation en continu qu'à la polymérisation en discontinu. On donne néanmoins la préférence à la polymérisation en discontinu.

Par polymérisation du fluorure de vinylidène, on entend l'homopolymérisation du fluorure de vinylidène, ainsi que la copolymérisation de mélanges de monomères à teneur prépondérante, et de préférence supérieure à 85% molaires en fluorure de vinylidène tels que par exemple des mélanges de fluorure de vinylidène et d'autres oléfines fluorées, telles que le fluorure de vinyle, le trifluoréthylène, le chlortrifluoréthylène, le tétrafluoréthylène et l'hexafluorpropylène.

Le procédé selon l'invention permet de régler efficacement le poids moléculaire des polymères du fluorure de vinylidène sans nuire au rendement de la polymérisation. Il conduit à des polymères du fluorure de vinylidène présentant une bonne stabilité thermique.

Les exemples qui suivent sont destinés à illustrer le procédé selon l'invention sans toutefois en limiter la portée.

Les exemples 1, 5 et 7 illustrent le procédé selon l'invention. Les exemples 2, 3 et 6, de comparaison, illustrent la mise en oeuvre de régulateurs de chaînes de l'art antérieur. L'exemple 4, de comparaison, illustre la polymérisation en l'absence de régulateur de chaînes.

## Exemple 1

Dans un autoclave de 5 litres, muni d'un agitateur à 2 pales inclinées à 45° et d'une double enveloppe, on introduit successivement 3300 cm$^3$ d'eau déminéralisée, dans laquelle on a dissous préalablement 1,1 g d'hydroxypropylméthylcellulose. On élimine la plus grande partie de l'oxygène présent dans l'autoclave par 3 mises sous vide à 40 mbar (à 15°C) avec, après chaque mise sous vide, remise sous pression de 1 bar d'azote. Sous balayage d'azote du ciel de l'autoclave, on introduit alors l'initiateur et le régulateur. On refait un vide à 133,3 mbar. Om met en marche l'agitation à 500 tr/min, on injecte 1100 g de fluorure de vinylidène, puis on met en chauffe progressivement le réacteur jusqu'à la température maximale, sans dépasser la pression maximale indiquée au Tableau I. On arrête la polymérisation après 3 h 30 min. On dégaze la suspension aqueuse (en abaissant la pression jusqu'à la pression atmosphérique) et on lave le polymère sur essoreuse jusqu'à ce que les eaux de lavage ne contiennent plus de mousse. On sèche le polymère en étuve à 60°C jusqu'à poids constant.

Les exemples 2 à 7 sont effectués suivant le mode opératoire général de l'exemple 1.

Dans le tableau I, en annexe, figurent la nature et la quantité d'initiateur et d'agent régulateur de chaînes mis en oeuvre, la température et la pression maximales atteintes en cours de polymérisation ainsi que la durée et le rendement de la polymérisation.

Dans le tableau II, en annexe, figurent les résultats de l'évaluation de la viscosité intrinsèque et de la stabilité thermique des polyfluorures de vinylidène obtenus.

La viscosité intrinsèque $[\eta]$, exprimée en l/g, a été calculée à partir de la viscosité spécifique mesurée à 110°C d'une solution à 2 g/l de polyfluorure de vinylidène dans le diméthylformamide suivant la formule:

$$[\eta] = \text{limite de } \left( \frac{\text{viscosité spécifique}}{\text{concentration}} \right) \text{ pour } C = 0$$

La stabilité thermique a été évaluée sur des plaques pressées pendant 30 minutes à 225°C au départ de polyfluorure de vinylidène granulé à 220°C. Les plaques pressées ont été soumises à un recuit à 165°C pendant 72 heures, après quoi on a mesuré leur indice de jaune (IJ).

La comparaison des exemples 1, 3 et 5 montre la supériorité du carbonate de bis (éthyle) par rapport à l'acétone sur le plan de l'efficacité du réglage de la viscosité intrinsèque et donc du poids moléculaire du polyfluorure de vinylidène.

La comparaison des exemples 1 et 2, d'une part, et des exemples 5 et 6, d'autre part, montre la supériorité du carbonate de bis (éthyle) respectivement par rapport à la méthyléthylcétone et à l'isopropanol, sur le plan du rendement de la polymérisation et de la stabilité thermique du polyfluorure de vinylidène.

# 0 120 524

TABLEAU I

Conditions de polymérisation

| N° de l'ex. | Initiateur | | Agent régulateur de chaînes | | Température max., °C | Pression max., bar | Durée totale h.min. | Rendement % |
|---|---|---|---|---|---|---|---|---|
| | Nature | Quantité,g | Nature | Quantité,g | | | | |
| 1 | IPP* | 3 | Carbonate de bis (éthyle) | 5 | 60 | 70 | 3h30 min | > 90 |
| 2 | " | 3 | méthyléthylcétone | 5 | 60 | 70 | 5h | 25 |
| 3 | " | 3 | acétone | 15 | 60 | 70 | 3h30min | > 90 |
| 4 | " | 10 | néant | – | 40 | 65 | 3h30min | > 90 |
| 5 | " | 3 | carbonate de bis(éthyle) | 15 | 60 | 70 | 3h30min | > 90 |
| 6 | " | 3 | isopropanol | 15 | 60 | 70 | 5h | 70 |
| 7 | TAPPI** | 4 | carbonate de bis(éthyle) | 10 | 65 | 85 | 6h | 80 |

IPP* : peroxydicarbonate de di-isopropyle

TAPPI** : perpivalate de tert-amyle

TABLEAU II

Evaluation du polyfluorure de vinylidène

| N° de l'exemple | Viscosité intrinsèque $[\eta]$ . 1/g | Stabilité thermique IJ |
|---|---|---|
| 1 | 0,12 | 35 |
| 2 | 0,07 | 90 |
| 3 | 0,13 | 35 |
| 4 | 0,12 | 70 |
| 5 | 0,08 | 35 |
| 6 | 0,08 | 50 |
| 7 | 0,09 | 25 |

4

**Revendications**

1 - Procédé pour la polymérisation dans un milieu aqueux de mise en suspension du fluorure de vinylidène à l'intervention d'un initiateur oléosoluble de la polymérisation radicalaire en présence d'un agent de mise en suspension et d'un agent régulateur de chaînes, caractérisé en ce que l'agent régulateur de chaînes est un carbonate de bis (alkyle) dont les groupements alkyles contiennent cinq atomes de carbone au plus.

2 - Procédé selon la revendication 1, caractérisé en ce que les groupements alkyles du carbonate de bis (alkyle) contiennent de 1 à 3 groupements méthylènes.

3 - Procédé selon les revendications 1 ou 2, caractérisé en ce que le carbonate de bis (alkyle) est le carbonate de bis (éthyle).

4 - Procédé selon la revendication 1, caractérisé en ce qu'on met en oeuvre une quantité d'agent régulateur de chaînes comprise entre 0,05 et 2,5 % en poids par rapport au monomère.

5 - Procédé selon les revendications 1 et 4, caractérisé en ce qu'on met en oeuvre une quantité d'agent régulateur de chaînes comprise entre 0,5 et 2% en poids et une quantité d'initiateur comprise entre 0,05 et 0,5% en poids par rapport au monomère.

6 - Procédé selon l'une quelconque des revendications 1 à 5, caractérisé en ce qu'il est appliqué à la polymérisation à une température supérieure à 30,1°C.

7 - Procédé selon la revendication 6 caractérisé en ce qu'il est appliqué à la polymérisation à une température comprise entre 35 et 100°C et sous une pression initiale de 55 à 200 bars.

**Patentansprüche**

1. Polymerisationsverfahren von Vinylidenfluorid in einer wäßrigen Suspension mit der Mitwirkung eines öllöslichen Initiators der Radikal-Polymerisation in Gegenwart eines Suspendiermittels und eines Regelungsmittels der Kettenbildung, dadurch gekennzeichnet, daß das Regelungsmittel der Kettenbildung ein Bisalkyl-carbonat ist, dessen Alkylgruppen höchstens 5 Kohlenstoffatome enthalten.

2. Verfahren nach Anspruch 1, dadurch gekennzeichnet, daß die Alkylgruppen des Bisalkyl-carbonats 1 bis 3 Methylengruppen enthalten.

3. Verfahren nach Anspruch 1 oder 2, dadurch gekennzeichnet, daß das Bisalkyl-carbonat das Bisethylcarbonat ist.

4. Verfahren nach Anspruch 1, dadurch gekennzeichnet, daß man eine Menge des Regelungsmittels der Kettenbildung zwischen 0,05 und 2,5 Gew.-% bezogen auf Monomer einsetzt.

5. Verfahren nach den Ansprüchen 1 und 4, dadurch gekennzeichnet, daß man eine Menge des Regelungsmittels der Kettenbildung zwischen 0,5 und 2 Gew.-% und eine Menge des Initiators zwischen 0,05 und 0,5 Gew.-% bezogen auf Monomer einsetzt.

6. Verfahren nach einem der Ansprüche 1 bis 5, dadurch gekennzeichnet, daß es bei der Polymerisation bei einer Temperatur oberhalb von 30,1 °C angewandt wird.

7. Verfahren nach Anspruch 6, dadurch gekennzeichnet, daß es bei der Polymerisation bei einer Temperatur zwischen 35 und 100 °C und unter einem anfänglichen Druck von 55 bis 200 bar angewandt wird.

**Claims**

1. Process for the polymerisation, in an aqueous suspending medium, of vinylidene fluoride with the aid of an oil-soluble free radical polymerisation initiator in the presence of a suspending agent and a chain regulator, characterised in that the chain regulator is a bis (alkyl) carbonate, the alkyl groupings of which contain not more than five carbon atoms.

2. Process according to Claim 1, characterised in that the alkyl groupings of the bis (alkyl) carbonate contain 1 to 3 methylene groupings.

3. Process according to Claim 1 or 2, characterised in that the bis (alkyl) carbonate is bis (ethyl) carbonate.

4. Process according to Claim 1, characterised in that an amount of chain regulator of between 0.05 and 2.5% by weight, based on the monomer, is used.

5. Process according to Claims 1 and 4, characterised in that an amount of chain regulator of between 1.5 and 2% by weight and an amount of initiator of between 0.05 and 0.5% by weight, based on the monomer, is used.

6. Process according to any one of Claims 1 to 5, characterised in that it is applied to polymerisation at a temperature above 30.1°C.

7. Process according to Claim 6, characterised in that it is applied to polymerisation at a temperature of between 35 and 100°C under an initial pressure of 55 to 200 bar.